# EUROPEAN PATENT SPECIFICATION

(11) **EP 2 074 366 B1**
(45) Date of publication and mention of the grant of the patent: **06.01.2016**
(21) Application number: 07860950.0
(22) Date of filing: 16.10.2007
(51) Int. Cl.: F26B 5/06, A23L 3/44, B01D 1/18, B01J 2/26

(54) **IMPROVEMENTS IN SPRAY FREEZE DRYING**
VERBESSERTE SPRÜHGEFRIERTROCKNUNG
AMÉLIORATIONS DANS LA LYOPHILISATION PAR PULVÉRISATION

(30) Priority: 16.10.2006 NZ 55056306
(43) Date of publication of application: 01.07.2009
(73) Proprietor: Agresearch Limited, Hamilton (NZ)
(72) Inventor: ANDERSON, Steve, Blenheim (NZ); CARSON, James Kenneth, Hamilton (NZ); CUDDON, John, Blenheim (NZ); PLANTHABER, Steven, Blenheim (NZ)
(74) Representative: Lock, Graham James
(86) International application number: PCT/NZ2007/000305
(87) International publication number: WO 2008/048115

(56) References cited:
- WO-A1-2005/105253
- DE-A1- 1 729 463
- GB-A- 1 559 920
- US-A- 2 515 098
- US-A- 3 232 068
- US-A- 3 740 860
- US-A- 4 033 048
- US-A1- 2002 050 072
- US-A1- 2004 154 317

## Description

### TECHNICAL FIELD

The invention relates to improvements in spray freeze drying,

### BACKGROUND ART

Spray freeze drying is discussed in the applicant's co-pending patent, NZ 529594/529595 (also published as WO 2005/105253). As mentioned in these specifications, freeze drying materials is well known in the art, for example to remove an aqueous component from a solid suspension leaving a dry solid which may have various uses such as for forming tablets and capsules.

For example, US 2002/050072 A1 describes a method for obtaining a freeze-dried powder product via various process steps, and associated apparatus for carrying out the method, including one embodiment in which a liquid material is distributively fed from the upper surface side of a shell, which is connected and joined to an outer cylinder further joined to a vacuum pump and a trapping chamber which maintains the interior of the shell in the vacuum condition, by sequentially spraying the liquid material in its atomized form from a plurality of spray nozzles provided on the lower surface side of a distributor disposed in the outer cylinder and connected with a pipeline leading to the tank of liquid material, to thereby spray the liquid material onto the inner wall surface of each of a plurality of tubes which are uprightly provided within the shell in a juxtaposed relationship. The spraying of the liquid material against the inner wall surface of each of the tubes in the shell is done by disposing spray nozzle pipes of a small diameter at the axial center position of each of the tubes and by perforating a multitude of atomizing nozzles in the cylindrical wall of the spray nozzle pipes to thereby connect the upper end of each of the atomizing nozzle pipes with the distributor disposed above the shell, and to thereby spray the liquid material onto the inner wall surface of each of the tubes from this nozzle pipe, which may advantageously be made movable in the up-and-down direction, or in the rotational direction, of the shell. In the applicants co-pending patent, methods and apparatus are described to produce a dried solid from a freeze dryer whereby the solid may be produced on a continuous basis. A key improvement in the previous apparatus and methods was to spray the inlet material and subsequent collection on a conveyed collection surface.

Thus, WO 2005/105253 describes a method of drying or concentrating a liquid substance having solid particles in suspension or a substance dissolved therein comprising the steps of: holding a chamber at a temperature and pressure below the triple-point of the liquid substance, injecting and/or atomising the liquid substance into the chamber to generate a frozen liquid substance portion ("FLS portion") and a first evaporated liquid substance portion ("FEL portion"), collecting the FLS portion as a layer on a surface, and conveying the collected FLS portion on the surface, wherein the surface conveys the collected FLS portion at a rate which controls the thickness of the layer of collected FLS on the surface. Atomisation of the liquid substance may be induced by a variety of feed devices such as, single-liquid nozzle (pressure type), two-liquid nozzle (pneumatic type), centrifugal (spinning disc), ultrasonic nozzles and various other rotary atomisers and air atomisation techniques may be employed.

Further improvements on the methods and apparatus disclosed in the co-pending patent applications are now disclosed.

It is an object of the present invention to at least to provide the public with a useful choice.

No admission is made that any reference including any patents or patent applications cited in this specification constitutes prior art. The discussion of the references states what their authors assert, and the applicants reserve the right to challenge the accuracy and pertinency of the cited documents. It will be clearly understood that, although a number of prior art publications are referred to herein, this reference does not constitute an admission that any of these documents form part of the common general knowledge in the art, in New Zealand or in any other country.

It is acknowledged that the term 'comprise' may, under varying jurisdictions, be attributed with either an exclusive or an inclusive meaning. For the purpose of this specification, and unless otherwise noted, the term 'comprise' shall have an inclusive meaning - i.e. that it will be taken to mean an inclusion of not only the listed components it directly references, but also other non-specified components or elements. This rationale will also be used when the term 'comprised' or 'comprising' is used in relation to one or more steps in a method or process.

Further aspects and advantages of the present invention will become apparent from the ensuing description which is given by way of example only.

### DISCLOSURE OF INVENTION

According to a first aspect of the present invention there is provided an apparatus for drying or concentrating a raw material which at ambient conditions has a solid and aqueous portion including:
(a) a chamber and a chamber pressure reduction device; and,
(b) at least one inlet nozzle through which the raw material is injected into the chamber;
(c) at least one collection surface which collects a frozen portion of the raw material; and,
wherein the pressure reduction device maintains the chamber at a pressure below at least the triple-point pressure of the aqueous portion of the raw material, to cause the injected raw material to separate into a frozen portion and a first evaporated portion;
wherein the frozen portion is collected on at least one collection surface and accumulated as a layer on the surface or surfaces and,
characterised in that the inlet nozzle or nozzles are attached to a pivoting arm or arms which are attached to at least one actuator that moves the arm or arms through a pre-set course such that the inlet nozzle or nozzles move across the collection surface during operation and spray an arc or arcs of raw material onto the collection surface.

In one embodiment, the frozen portion is collected on at least one collection surface and accumulated as a layer on the surface or surfaces, the thickness of which is controlled by at least one parameter selected from:
i. the raw material inlet flow rate;
ii. use of positive inlet pressure;
iii. inlet nozzle size and configuration; and/or,
iv. the distance between the inlet nozzle outlet and the collection surface.

According to a further aspect of the present invention there is provided a method of drying or concentrating a raw material which at ambient conditions has a solid and an aqueous portion by the steps of:
(a) holding a chamber at a temperature and pressure below the triple-point of the aqueous portion of the raw material;
(b) injecting the raw material into the chamber from at least one inlet nozzle to generate a frozen portion and a first evaporated portion;
(c) collecting the frozen portion as a layer on at least one collection surface;
(d) conveying the collected frozen portion on the collection surface or surfaces; and,
wherein the thickness of the frozen portion on the collection surface is controlled by at least one parameter selected from:
i. the raw material inlet flow rate;
ii. use of positive inlet pressure;
iii. inlet nozzle size and configuration; and/or,
iv. the distance between the inlet nozzle outlet and the collection surface,
characterised in that the inlet nozzle or nozzles are attached to a pivoting arm or arms which are attached to at least one actuator that moves the arm or arms through a pre-set course such that the inlet nozzle or nozzles move across the collection surface during operation and spray an arc or arcs of raw material onto the collection surface.

Preferably, the thickness of the layer collected on the collection surface is also controlled by the rate of conveyance of the collection surface.

The inventors have found that several critical features are involved in forming a frozen layer on the collection surface beyond just the rate of conveyance. Forming a layer that is smooth, continuous and fine (termed for the purposes of this specification as a 'monolayer') is critical in achieving a uniformly dried product from the dryer. Preferably, the frozen layer on the collection surface is characterised by being smooth, continuous and a fine width. For the purposes of this specification, the term 'fine width' refers to the layer being less than 10mm in width. In preferred embodiments, the width is less than 5mm.

For the purposes of this disclosure and ease of reading, the collection surface may be referred to interchangeably as a conveyer belt. This should not be seen as limiting as other conveying methods such as those described in NZ 529594/529595 are also envisaged.

Preferably, the raw material is a solid suspended in or dissolved in the aqueous portion. More preferably, the raw material includes up to 50% solid material. Still more preferably, the raw material includes less than 30% solid material. As should be appreciated by those skilled in the art, these parameters equate to various dairy products such as milk to be dried, nutraceutical extracts and other products. It is envisaged that the raw material could also be a frozen solid material containing an aqueous portion. For example, the dryer assembly may be used for continuous drying of solid materials such as frozen vegetables. Further reference will be made to drying of solid / aqueous mixtures however this should not be seen as limiting.

Preferably, the raw material inlet flow rate is tailored to the collection surface size at a ratio of 1 kg/hour of raw material per 0.25 to 1.5 metres of collection surface width. As noted above, a key parameter found to achieve formation of a monolayer on the collection surface is use of an inlet rate tailored to the conveyer belt width. In one embodiment, the inlet rate is approximately 10kg/hour of raw material to be dried on an approximately 0.5 m wide and 9 metre long conveyer belt. If the rate is increased above this level, product collected on the belt may be too thick to dry sufficiently and may also not fully freeze on formation of a monolayer resulting in small explosions as described further below.

A further key parameter found by the inventors is that the raw material is pumped into the vacuum chamber using a positive pressure rather than relying on the vacuum in the chamber alone to drive the dispersion of raw material into the chamber. In preferred embodiments, the back pressure ranges from approximately 0.138 to 0.276 MPa (20 to 40psi). One problem noted by having insufficient back pressure is that discrete snow-like crystals are deposited on the conveyer belt surface rather than formation of a monolayer. The crystals also tend to blow around the chamber, not staying in one position (a monolayer) during drying.

The inventors have found that, once vacuum pressure and inlet pressure are stabilised, the inlet nozzle applies the raw material as a flat sheet monolayer on a continuous basis for hours at a time without need to adjust any parameters.

In preferred embodiments as described in NZ 529594/529595, the raw material is dispersed into the vacuum chamber using a nozzle or nozzles that atomise the raw material into small particles.

A further key parameter in achieving the desired size of particle as well as achieving a monolayer of material on the conveyer belt is nozzle selection. Preferably, the inlet nozzle or nozzles are selected based on injecting sufficient quantities of raw material such that:
(i) initial sublimation of first evaporated portion can occur;
(ii) the frozen portion transfers to a solid; and
(iii) the nozzle size is tailored to the raw material viscosity.

It is the inventors' experience that atomiser nozzle choice is a critical variable. Preferred nozzle types are those that are relatively small and spray a half cone shaped arrangement. Full cone nozzle types may be used but the inlet flow of raw material must then be carefully regulated to ensure that liquid material does not become frozen under a solid cap on the conveyer belt resulting in sublimation and small explosions (see below). Nozzles are preferably sized to account for material viscosity. For example, materials with higher viscosity require larger nozzle sizes in order to ensure a smooth flow and full atomisation of the raw material.

A yet further key parameter in the inventors experience is the distance between the inlet nozzle and the collection surface. In preferred embodiments, the distance between the inlet nozzle or nozzles and the collection surface or surfaces varies from between 70 and 120mm. In a particularly preferred embodiment, this distance is approximately 90mm, although, it should be appreciated that this may vary depending on at least the raw material and nozzle configuration.

The inlet nozzle or nozzles move across the collection surface during operation. The inlet nozzle is attached to a pivoting arm which is attached to an actuator which moves the arm through a pre-set course such that the inlet nozzle sprays an arc of raw material onto the collection surface. For the purposes of this specification, this arc pivot is referred to as a 'swinging arm'. In one embodiment, a swinging arm is used to spray raw material onto a conveyer belt where the arc tracks the inlet nozzle across the width of the belt. In an alternative embodiment, multiple swinging arms are used on one belt to cover a belt surface and the swinging arms may be arranged in parallel beside each other or in series after each other. Whilst the above description is made with respect to a pivot producing a spray arc, other moving nozzle patterns are envisaged such as straight line back and forth patterns across the belt. An arc pattern should not be seen as limiting.

Preferably, the vacuum pressure in the chamber remains at an approximately steady level of less than or equal to 4.0 mbar. The inventors have found that the vacuum chamber must operate at a pressure below the triple point of the aqueous portion of the raw material to be separated from the solid material. In preferred embodiments, this pressure for water containing raw materials ranges from approximately 0.3 to 4.0 mbar.

In addition to the parameters discussed above, vacuum pressure has been found to be a key variable. For example, if the vacuum pressure is greater than 4 mbar, the raw material tends to fully freeze only after being collected on the conveyer belt. This is not desirable as uneven layer formation results and even small explosions may occur from trapped liquid under an outer solid cap subliming and flashing off breaking open the cap. Opportunities for product deterioration may also result from higher vacuum pressures delaying freezing.

A further factor found important by the inventors has been that it is important that the vacuum pressure remain at an approximately steady level and if changing, that the change occurs at a relatively slow rate. In preferred embodiments, any fluctuations in pressure in the vacuum chamber are less than 0.5 to 1.5 mbar above or below the set vacuum pressure. Fluctuations greater than this, particularly if they occur quickly, may result in uneven layering and potentially sublimation problems such as small explosions noted above.

In a further embodiment, particle size reducing devices may also be incorporated into the design of the dryer. In one preferred embodiment, the vacuum chamber includes a granulator to reduce the product particle size as the dried material leaves the conveyer belt. Preferably, the granulator is a rotor and cutter house configuration.

Preferably, the collection surface or surfaces is or are conveyer belt(s).

Preferably, the belt or belts include at least one inlet nozzle per belt.

In one embodiment, the raw material is injected onto a first upper most conveyer belt and through gravity, the material drops onto at least one further conveyer belt located underneath the first belt until being collected after being dried.

In preferred embodiments, the dryer includes at least two condensing chambers including coils onto which vaporised water or other aqueous substances condense so that in use, one chamber may be used in operation and the other chamber isolated from the vacuum chamber to allow alternate defrosting. It should be appreciated that by having two or more chambers, one chamber may be used in operation and the other chamber isolated from the vacuum chamber to allow alternate defrosting without disrupting processing.

According to a further aspect of the present invention there is provided a dried product produced using the apparatus substantially as described above.

According to a further aspect of the present invention there is provided a dried product produced by the method substantially as described above.

From the above description it should be appreciated that there are provided improved methods and apparatus for drying a raw material having a solid and aqueous portion. Key advantages from the method and apparatus include:
- small particle size and formation of a smooth continuous and fine layer (monolayer) on the collection surface resulting in a reduction in energy required compared to traditional batch drying methods;
- final product moisture content of approximately 1-2%, comparable to other drying methods;
- continuous processing;
- reduced labour costs from use of the method and apparatus due to greater automation and removal of steps such as manual loading and unloading of the dryer; and,
- reduced cleaning required and the ability to clean in place (CIP).

### BRIEF DESCRIPTION OF DRAWINGS

Further aspects of the present invention will become apparent from the ensuing description which is given by way of example only and with reference to the accompanying drawings in which:
- Figure 1: shows a diagram of a spray freeze dryer according to one aspect of the present invention;
- Figure 2: shows a diagram of one swinging arm configuration; and,
- Figure 3: shows a diagram of one multiple belt configuration in accordance with the present invention.

### BEST MODES FOR CARRYING OUT THE INVENTION

Reference is made to the applicant's co-pending patent applications NZ 529594/529595 and WO 2005/105253 for a detailed description of the method and apparatus. Alternative embodiments described above are now further described in more detail below.

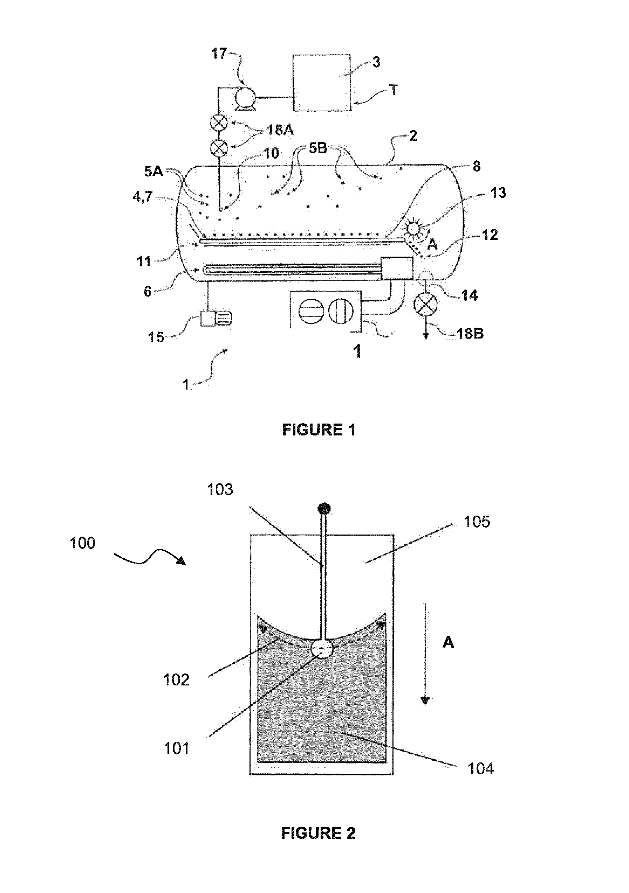

Referring to Figure 1, an apparatus for drying or concentrating a material having a solid and aqueous portion at ambient conditions is shown. The apparatus includes a spray freeze dryer generally indicated by arrow 1. The dryer 1 includes a vacuum chamber 2 maintained at a pressure below the triple point of the aqueous portion of the raw material using a pump 15.

Raw material 3 is located in a tank T. In this embodiment the raw material contains less than 50% solids dispersed within an aqueous solution.

The raw material is pumped using inlet pump 17 via airlock valves 18A and inlet nozzle 10 into the vacuum chamber 2. The nozzle 10 disperses the raw material 3 as a fine spray and the evaporated portions 5A and 5B vaporises on entry to the chamber 2 and subsequently condenses out on condensing coils 6.

Frozen portion 4 is collected on a conveyer belt 8 as a fine monolayer of frozen material 7. The monolayer 7 is conveyed along the belt 8 and further evaporated portion 5A and 5B sublimes off the frozen portion 4 due to heating panels 11 underneath the belt 8. The dried material 12 is collected 18B via outlet airlock valve 14. A scraper device 13 may be used to remove dried material 12 from the belt 8.

The inventors have found that a critical step in achieving a dried product 12 is the production of a smooth monolayer 7 when the raw material 3 is sprayed into the chamber and collected on the belt 8.

Critical parameters in achieving this monolayer include the rate of conveyance of the belt 8 but also other parameters including the raw material 3 inlet rate; the use of positive pressure from the inlet pump(s) 18A; inlet nozzle 10 size and configuration; and the distance between the inlet nozzle 10 and conveyer belt 8.

In this example the inlet rate is approximately 10kg/hour of inlet material 3 based on an approximately 9 metre long conveyer belt 8. If the inlet rate is increased above this level, the layer 7 collected on the belt 8 may be too thick to dry sufficiently and may also not fully freeze on forming of a monolayer 7 resulting in small explosions where liquid phase is trapped beneath a solid phase on the monolayer. This liquid phase subsequently boils off and explodes the upper solid layer.

In the example shown in Figure 1, the raw material 3 is pumped into the vacuum chamber 2 from inlet pumps 18A using a back pressure ranging from approximately 0.138 to 0.276 MPa (20 to 40psi). One problem noted by having insufficient back pressure is that discrete snow-like crystals (not shown) are deposited on the conveyer belt surface 7 rather than formation of a monolayer. The crystals also tend to blow around the chamber 2, not staying in one position during drying.

In the example shown in Figure 1, the inlet nozzle 10 is selected based on atomising sufficient quantities of raw material 3 to allow initial sublimation; transfer of frozen portion to a solid phase; and, to take into account raw material 3 viscosity. One preferred nozzle 10 type is a half cone atomiser which sprays a ring shape pattern.

In the embodiment shown in Figure 1, the distance between the nozzle 10 outlet and the conveyor belt 8 is approximately 90mm.

To ensure formation of a smooth, continuous and fine monolayer on the belt 8, the vacuum pressure in the embodiment of Figure 1 is maintained below 3 mbar. This is done to avoid uneven layer formation results and even small explosions occurring from trapped liquid under an outer solid cap subliming and flashing off breaking open the cap. Fluctuations in pressure are also minimised to assist in avoiding uneven layering and sublimation problems such as small explosions noted above.

The chamber also includes a rotor and cutter house configuration granulator (not shown) inside the vacuum chamber 2, which reduces the particle size of the dried material 12 before it leaves the vacuum chamber 2.

Referring to Figure 2, a swinging arm embodiment 100 is shown whereby the nozzle 101 moves through an arc 102 defined by a pivoting arm 103 over the collection surface 105. The collection surfaces moves in direction A. The arm 103 is attached to an actuator (not shown), which moves the arm 103 through a pre-set course such that the nozzle 101 sprays an arc 102 of frozen portion which forms a monolayer 104 on the collection surface 105.

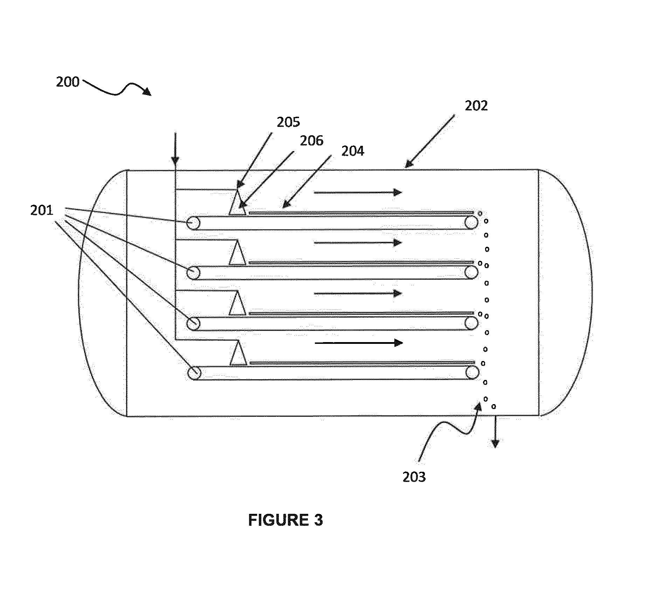

Referring to Figure 3, a configuration 200 is shown which uses multiple conveyer belts 201. A key advantage of multiple belts 201 within the same vacuum chamber 202 is increased production rates. In the embodiment 200 shown in Figure 3, the chamber 202 includes four belts 201 stacked vertically, each belt 201 being approximately 1.2 metres wide and 12 metres long. It is envisaged that such an arrangement will be able to produce up to 1 tonne of dry material 203 per day. A monolayer 204 of frozen portion is formed on each belt 201 using multiple inlet nozzles 205 spraying a cone pattern 206 onto the belt 201. In the embodiment shown, one nozzle 205 is used per belt 201. The monolayer 204 moves along the belts 201 and is collected as a dry material 203.

In a further arrangement not shown, the condensing coils are located in one or more adjacent chambers. These chambers may be alternately sealed whereby one chamber may be operated and the other chamber isolated from the vacuum chamber to allow alternate defrosting and cleaning without disrupting processing.

From the above description it should be appreciated that there is provided improved methods and apparatus for drying a solid material containing an aqueous component with improved identification of critical parameters to assist in forming a smooth, continuous and fine layer on the collection surface. The fine layer results in effective drying.

Aspects of the present invention have been described by way of example.

## Claims

1. An apparatus for drying or concentrating a raw material which at ambient conditions has a solid and aqueous portion including:
(a) a chamber (2, 202) and a chamber pressure reduction device (15); and,
(b) at least one inlet nozzle (10, 101, 205) through which the raw material (3) is injected into the chamber;
(c) at least one collection surface (8, 105, 201) which collects a frozen portion (4) of the raw material: and,
wherein the pressure reduction device maintains the chamber at a pressure below at least the triple-point pressure of the aqueous portion of the raw material, to cause the injected raw material to separate into a frozen portion and a first evaporated portion (5A, 5B);
wherein the frozen portion is collected on at least one collection surface and accumulated as a layer (7, 204) on the surface or surfaces; and, **characterised in that** the inlet nozzle or nozzles are attached to a pivoting arm or arms (103) which are attached to at least one actuator that moves the arm or arms through a pre-set course such that the inlet nozzle or nozzles move across the collection surface during operation and spray an arc or arcs (102) of raw material onto the collection surface.

2. The apparatus as claimed in claim 1 wherein the apparatus is for drying or concentrating a raw material (3) which is a solid suspended in or dissolved in the aqueous portion.

3. The apparatus as claimed in any one of the above claims wherein the raw material (3) is injected into the vacuum chamber (2, 202) using a nozzle or nozzles (10, 101, 205) that atomise the raw material into particles.

4. The apparatus as claimed in any one of the above claims wherein the inlet nozzle or nozzles (10, 101, 205) are selected based on injecting sufficient quantities of raw material such that:
a) initial sublimation of first evaporated portion can occur;
b) the frozen portion transfers to a solid; and
c) the nozzle size is tailored to the raw material viscosity.

5. The apparatus as claimed in any one of the above claims where in the collection surface or surfaces (8, 105, 201) is or are conveyer belt(s).

6. The apparatus as claimed in claim 5 wherein the chamber (2, 202) includes two or more conveyor belts (8, 105, 201), stacked in a parallel arrangement within the vacuum chamber (2, 202).

7. The apparatus as claimed in claim 5 or claim 6 wherein the belt or belts (8, 105, 201) include at least one inlet nozzle (10, 101, 205) per belt.

8. A method of drying or concentrating a raw material which at ambient conditions has a solid and an aqueous portion by the steps of:
(a) holding a chamber (2, 202) at a temperature and pressure below the triple-point of the aqueous portion of the raw material;
(b) injecting the raw material (3) into the chamber from at least one inlet nozzle (10, 101, 205) to generate a frozen portion (4) and a first evaporated portion (5A, 5B);
(c) collecting the frozen portion as a layer (7, 204) on at least one collection surface;
(d) conveying the collected frozen portion on the collection surface or surfaces (8, 105, 201); and,
wherein the thickness of the frozen portion on the collection surface is controlled by at least one parameter selected from:
i. the raw material inlet flow rate;
ii. use of positive inlet pressure;
iii. inlet nozzle size and configuration; and/or,
iv. the distance between the inlet nozzle outlet and the collection surface,
**characterised in that** the inlet nozzle or nozzles are attached to a pivoting arm or arms (103) which are attached to at least one actuator that moves the arm or arms through a pre-set course such that the inlet nozzle or nozzles move across the collection surface during operation and spray an arc or arcs (102) of raw material onto the collection surface.

9. The method as claimed in claim 8 wherein the raw material (3) is a solid suspended in or dissolved in the aqueous portion.

10. The method as claimed in claim 8 or 9 wherein the raw material (3) is injected into the vacuum chamber (2, 202) using a nozzle or nozzles (10, 101, 205) that atomise the raw material into particles.

11. The method as claimed in any one of claims 8 to 10 wherein the inlet nozzle or nozzles (10, 101, 205) are selected based on injecting sufficient quantities of raw material (3) such that:
a) initial sublimation of first evaporated portion can occur;
b) the frozen portion transfers to a solid; and
c) the nozzle size is tailored to the raw material viscosity.

12. The method as claimed in any one of claims 8 to 11 wherein the collection surface or surfaces is or are conveyer belt(s) (8, 105, 201).

13. The method as claimed in claim 12 wherein the chamber includes two or more conveyer belts (8, 105, 201), stacked in a parallel arrangement within the vacuum chamber (2, 202).

14. The method as claimed in claim 12 or claim 13 wherein the belt or belts (8, 105, 201) include at least one inlet nozzle (10, 101, 205) per belt.

## Patentansprüche

1. Vorrichtung zum Trocknen oder Konzentrieren eines Rohmaterials, das bei Umgebungsbedingungen einen festen und wässrigen Anteil aufweist, welche umfasst:
(a) eine Kammer (2, 202) und eine Kammer-Druckreduzierungs-Einrichtung (15); und
(b) mindestens eine Einlaß-Düse (10, 101, 205), durch die das Rohmaterial (3) in die Kammer injiziert wird;
(c) mindestens eine Gewinnungs-Oberfläche (8, 105, 201), an der ein gefrorener Teil (4) des Rohmaterials gewonnen wird; und
worin die Druckreduzierungs-Einrichtung die Kammer bei einem Druck unter mindestens dem Tripelpunkt-Druck des wässrigen Teils des Rohmaterials hält, so dass sich das injizierte Rohmaterial in einen gefrorenen Teil und einen ersten verdampften Teil (5A, 5B) trennt;
worin der gefrorene Teil auf mindestens einer Gewinnungs-Oberfläche gewonnen und als Schicht (7, 204) auf der Oberfläche oder Oberflächen angehäuft wird; und
**dadurch gekennzeichnet, dass** die Einlaß-Düse oder -Düsen an einem Schwenk-Arm oder -Armen (103) angebracht ist, der/die an mindestens einer Betätigungseinrichtung angebracht ist/sind, mit der der Arm oder die Arme über einen festgelegten Lauf bewegt wird, so dass sich die Einlaß-Düse oder -Düsen während des Betriebs über die Gewinnungs-Oberfläche bewegt/bewegen und einen Bogen oder Bögen (102) aus Rohmaterial auf die Gewinnungsoberfläche sprüht.

2. Vorrichtung nach Anspruch 1, worin die Vorrichtung zum Trocknen oder Konzentrieren eines Rohmaterials (3) ist, das ein in dem wässrigen Teil suspendierter oder gelöster Feststoff ist.

3. Vorrichtung nach einem der vorstehenden Ansprüche, worin das Rohmaterial (3) unter Verwendung einer Düse oder Düsen (10, 101, 205) in die Unterdruckkammer (2, 202) injiziert wird, durch die das Rohmaterial in Teilchen verdüst wird.

4. Vorrichtung nach einem der vorstehenden Ansprüche, worin die Einlaß-Düse oder - Düsen (10, 101, 205) auf Grundlage des Einspritzens ausreichender Mengen an Rohmaterial ausgewählt wird/werden, so dass :
a) eine anfängliche Sublimierung eines ersten verdampften Anteils erfolgen kann;
b) der gefrorene Anteil sich in einen Feststoff umwandelt; und
c) die Düsengröße auf die Viskosität des Rohmaterials abgestimmt ist.

5. Vorrichtung nach einem der vorstehenden Ansprüche, worin ein Förderband oder Förderbänder in der Gewinnungs-Oberfläche oder in den Gewinnungs-Flächen (8, 105, 201) vorhanden ist/sind.

6. Vorrichtung nach Anspruch 5, worin die Kammer (2, 202) zwei oder mehrere Förderbänder (8, 105, 201) umfasst, die in der Unterdruckkammer (2, 202) in paralleler Anordnung gestapelt sind.

7. Vorrichtung nach Anspruch 5 oder Anspruch 6, worin das Förderband oder die Förderbänder (8, 105, 201) mindestens eine Einlass-Düse (10, 101, 205) pro Förder-Band umfasst/umfassen.

8. Verfahren zum Trocknen oder Konzentrieren eines Rohmaterials, das bei Umgebungsbedingungen einen festen und einen flüssigen Teil aufweist, durch die Schritte:
(a) Halten einer Kammer (2,202) bei einer Temperatur und einem Druck unter dem Tripel-Punkt des wässrigen Anteils des Rohmaterials;
(b) Injizieren des Rohmaterials (3) in die Kammer aus mindestens einer Einlaß-Düse (10, 101, 205), um einen gefrorenen Anteil (4) und einen ersten verdampften Anteil (5A, 5B) zu erzeugen;
(c) Gewinnen des gefrorenen Anteils als Schicht (7, 204) auf mindestens einer Gewinnungs-Oberfläche;
(d) Transportieren des gewonnenen gefrorenen Teils auf der Gewinnungs-Oberfläche oder den -Oberflächen (8, 105, 201); und
wobei die Dicke des gefrorenen Anteils der Gewinnungs-Oberfläche durch mindestens einen Parameter gesteuert wird, ausgewählt unter:
i. der Einfluß-Strömungsrate des Rohmaterials;
ii. der Verwendung eines positiven Einlaß-Drucks;
iii. der Düsengröße und Konfiguration des Einlasses; und/oder
iv. der Entfernung zwischen dem Einlaß-Düsen-Ausgang und der Gewinnung-Oberfläche,
**dadurch gekennzeichnet, dass** die Einlaß-Düse oder -Düsen an einen Schwenk-Arm oder -Armen (103) angebracht ist, der/die an mindestens eine Betätigungs-Einrichtung angebracht ist/sind, mit der der Arm oder die Arme über einen festgelegten Lauf bewegt wird/werden, so dass sich die Einlaß-Düse oder -Düsen während des Betriebs über die Gewinnungs-Oberfläche bewegt und einen Bogen oder Bögen (1,2) aus Rohmaterial auf die Gewinnungs-Oberfläche sprüht.

9. Verfahren nach Anspruch 8, wobei das Rohmaterial (3) ein in dem wässrigen Anteil suspendierter oder gelöster Feststoff ist.

10. Verfahren nach Anspruch 8 oder 9, wobei das Rohmaterial (3) unter Verwendung einer Düse oder Düsen (10, 101, 205) in die Unterdruckkammer (2, 202) injiziert wird, durch die das Rohmaterial in Teilchen verdüst wird.

11. Verfahren nach einem der Ansprüche 8 bis 10, wobei die Einlaß-Düse oder -Düsen (10, 101, 205) auf Grundlage des Einspritzens ausreichender Mengen an Rohmaterial ausgewählt wird/werden, so dass :
a) eine anfängliche Sublimierung eines ersten verdampften Anteils erfolgen kann;
b) der gefrorene Anteil sich in einen Feststoff umwandelt;
c) die Düsengröße auf die Viskosität des Rohmaterials abgestimmt ist.

12. Verfahren nach einem der Ansprüche 8 bis 11, wobei ein Förderband oder Förderbänder in der Gewinnungs-Oberfläche oder -Flächen (8, 105, 201) vorhanden ist/sind.

13. Vorrichtung nach Anspruch 12, wobei die Kammer (2, 202) zwei oder mehrere Förderbänder (8, 105, 201) umfasst, die in der Unterdruckkammer (2, 202) in paralleler Anordnung gestapelt sind.

14. Vorrichtung nach Anspruch 12 oder Anspruch 13, wobei das Förderband oder die Förderbänder (8, 105, 201) mindestens eine Einlass-Düse (10, 101, 205) pro Förder-Band umfasst.

## Revendications

1. Appareil pour sécher ou concentrer un matériau brut qui a aux conditions ambiantes une partie solide et une partie aqueuse, comprenant :
(a) une chambre (2, 202) et un dispositif (15) de réduction de pression de la chambre; et,
(b) au moins une buse d'admission (10, 101, 205) à travers laquelle le matériau brut (3) est injecté dans la chambre;
(c) au moins une surface collectrice (8, 105, 201) qui recueille une partie gelée (4) du matériau brut; et
dans lequel le dispositif de réduction de pression maintient la chambre à une pression inférieure au moins à la pression de point triple de la partie aqueuse du matériau brut, pour provoquer une séparation du matériau brut injecté en une partie gelée et une première partie évaporée (5A, 5B);
dans lequel la partie gelée est recueillie sur au moins une surface collectrice et accumulée en une couche (7, 204) sur la ou les surfaces; et,
**caractérisé en ce que** la ou les buses d'admission sont solidaires d'un bras pivotant ou de bras pivotants (103) qui sont solidaires d'au moins un actionneur qui déplace le bras ou les bras selon un parcours prédéterminé de sorte que la buse ou les buses d'admission balayent la surface collectrice pendant le fonctionnement et pulvérisent un arc ou des arcs (102) de matériau brut sur la surface collectrice.

2. Appareil tel que revendiqué dans la revendication 1 dans lequel l'appareil est prévu pour sécher ou concentrer un matériau brut (3) qui est un solide en suspension dans ou dissout dans la partie aqueuse.

3. Appareil tel que revendiqué dans l'une quelconque des revendications précédentes, dans lequel le matériau brut (3) est injecté dans la chambre à vide (2, 202) en utilisant une buse ou des buses (10, 101, 205) qui atomisent le matériau brut en des particules.

4. Appareil tel que revendiqué dans l'une quelconque des revendications précédentes, dans lequel la buse ou les buses d'admission (10, 101, 205) sont sélectionnées en se fondant sur une injection de quantités suffisantes de matériau brut de sorte que :
a) une sublimation initiale de la première partie évaporée puisse avoir lieu;
b) la partie gelée devienne un solide; et,
c) la taille de buse soit ajustée à la viscosité du matériau brut.

5. Appareil tel que revendiqué dans l'une quelconque des revendications précédentes dans lequel la surface ou les surfaces collectrice(s) est ou sont un (des) des tapis roulant(s) (8, 105, 201).

6. Appareil tel que revendiqué dans la revendication 5, dans lequel la chambre (2, 202) comprend deux ou davantage de tapis roulants (8, 105, 201), empilés selon une disposition parallèle à l'intérieur de la chambre à vide (2, 202).

7. Appareil tel que revendiqué dans la revendication 5 ou la revendication 6, dans lequel le tapis ou les tapis (8, 105, 201) comportent au moins une buse d'admission (10, 101, 205) par tapis.

8. Procédé de séchage ou de concentration d'un matériau brut qui a aux conditions ambiantes une partie solide et une partie aqueuse, par les étapes consistant à :
(a) maintenir une chambre (2, 202) à une température et une pression inférieures au point triple de la partie aqueuse du matériau brut;
(b) injecter le matériau brut (3) dans la chambre depuis au moins une buse d'admission (10, 101, 205) pour générer une partie gelée (4) et une première partie évaporée (5A, 5B);
(c) recueillir la partie gelée sous la forme d'une couche (7, 204) sur au moins une surface collectrice;
(d) convoyer la partie gelée recueillie sur la surface ou les surfaces collectrice(s) (8, 105, 201); et,
dans laquelle l'épaisseur de la partie gelée sur la surface collectrice est contrôlée par au moins un paramètre choisi parmi :
i. le flux d'admission du matériau brut;
ii. l'utilisation d'une pression d'admission positive;
iii. la taille et la configuration de la buse d'admission; et /ou
iv. la distance entre la sortie de la buse d'admission et la surface collectrice,
**caractérisée en ce que** la buse ou les buses d'admission sont solidaires d'un bras pivotant ou de bras pivotants (103) qui sont solidaires d'au moins un actionneur qui déplace le bras ou les bras selon un parcours prédéterminée de sorte que la buse ou les buses d'admission balayent la surface collectrice pendant le fonctionnement et pulvérisent un arc ou des arcs (102) de matériau brut sur la surface collectrice.

9. Procédé tel que revendiqué dans la revendication 8, dans lequel le matériau brut (3) est un solide en suspension dans ou dissout dans la partie aqueuse.

10. Procédé tel que revendiqué dans la revendication 8 ou 9, dans lequel le matériau brut (3) est injecté dans la chambre à vide (2, 202) en utilisant une buse ou des buses (10, 101, 205) qui atomisent le matériau brut en particules.

11. Procédé tel que revendiqué dans l'une quelconque des revendications 8 à 10, dans lequel la buse ou les buses d'admission (10, 101, 205) sont sélectionnées en se fondant sur une injection de quantités suffisantes de matériau brut de sorte que :
a) une sublimation initiale de la première partie évaporée puisse avoir lieu;
b) la partie gelée devienne un solide; et,
c) la taille de buse soit ajustée à la viscosité du matériau brut.

12. Procédé tel que revendiqué dans l'une quelconque des revendications 8 à 11 dans lequel la surface ou les surfaces collectrice(s) est ou sont un (des) tapis roulant(s) (8, 105, 201).

13. Procédé tel que revendiqué dans la revendication 12 dans lequel la chambre comprend deux ou davantage de tapis roulants (8, 105, 201) empilés dans une disposition parallèle à l'intérieure de la chambre à vide (2, 202).

14. Procédé tel que revendiqué dans la revendication 12 ou la revendication 13, dans laquelle le tapis ou les tapis (8, 105, 201) comportent au moins une buse d'admission (10, 101, 205) par tapis.
